# EUROPÄISCHE PATENTSCHRIFT

(11) **EP 2 227 499 B1**
(45) Veröffentlichungstag und Bekanntmachung des Hinweises auf die Patenterteilung: **15.02.2012**
(21) Anmeldenummer: 08868694.4
(22) Anmeldetag: 05.12.2008
(51) Int. Cl.: C08F 290/14, C09K 8/524

(54) **PFROPFCOPOLYMER ALS GASHYDRATINHIBITOR**
GRAFT COPOLYMER AS A GAS HYDRATE INHIBITOR
COPOLYMÈRE GREFFÉ UTILISÉ COMME INHIBITEUR D'HYDRATES DE GAZ

(30) Priorität: 28.12.2007 DE 102007063060
(43) Veröffentlichungstag der Anmeldung: 15.09.2010
(73) Patentinhaber: BASF SE, 67056 Ludwigshafen (DE)
(72) Erfinder: REICHENBACH-KLINKE, Roland, 83278 Traunstein (DE); NEUBECKER, Karin, 67227 Frankenthal (DE)
(74) Vertreter: Witz, Michael
(86) Internationale Anmeldenummer: PCT/EP2008/066883
(87) Internationale Veröffentlichungsnummer: WO 2009/083377

(56) Entgegenhaltungen:
- EP-A2- 0 457 205
- WO-A1-2008/019987
- WO-A1-2009/019050
- DE-A1- 4 129 901
- DE-A1- 19 935 063
- GB-A- 901 039

## Beschreibung

Gegenstand der vorliegenden Erfindung sind Pfropfcopolymere auf Basis eines Polyamids sowie deren Verwendung.

Wasserlösliche, biologisch abbaubare Copolymere auf Polyamidbasis und deren Verwendung sind aus der deutschen Offenlegungsschrift DE 103 14 354 A1 bekannt. Die dort beschriebenen Copolymere besitzen mindestens eine aufgepfropfte Seitenkette, aufgebaut aus Aldehyden und schwefelhaltigen Säuren und ggf. aus mindestens einer Verbindung der Reihe Ketone, aromatische Alkohole, Harnstoff-Derivate und Amino-s-triazine. Als bevorzugte Polyamid-Komponenten sind natürliche Polyamide, wie Caseine, Gelatinen und Collagene genannt. Verwendung finden die hier beschriebenen Copolymere insbesondere als Fließmittel oder Wasserretentionsmittel für anorganische Bindemittel und Pigmente.

US 6,840,319 beschäftigt sich unter anderem mit Zusammensetzungen und bioabbaubaren Additiven zur Fluid-Loss-Kontrolle beim Zementieren unterirdischer Formationszonen. Bei diesem Additiv handelt es sich um ein Kondensationsprodukt von Gelatine, Formaldehyd, Natriumsulfit und Aceton, sowie eine mit Ethylenoxid substituierte Hydroxyethylzellulose.

Gegenstand von US 6,681,856 ist ein Verfahren zur Zementierung unterirdischer Zonen, bei dem auf bioabbaubare Dispergiermittel zurückgegriffen wird. Die jeweiligen Dispergiermittel umfassen ein Pfropfpolymer auf Polyamidbasis, welches mindestens eine Seitenkette enthält, die auf Aldehyd und Schwefel-haltige Säuren oder deren Salze zurückgeht.

Die unveröffentlichte Patentanmeldung BCP 2 beschreibt die Verwendung von Copolymeren auf Polyamidbasis, die mindestens eine aufgepfropfte Seitenkette aufgebaut aus ethylenisch ungesättigten Verbindungen enthalten in bauchemischen Anwendungen, sowie bei der Erschließung, Ausbeutung und Komplettierung unterirdischer Erdöl- und Erdgaslagerstätten und bei Tiefenbohrungen.

Pfropfcopolymere und insbesondere solche auf Basis eines Polyamids sind somit aus dem einschlägigen Stand der Technik und insbesondere auch im Zusammenhang mit der Erschließung, Ausbeutung und Komplettierung unterirdischer Erdöl- und Erdgaslagerstätten bestens bekannt. Neben dem Zementieren von Bohrlöchern, der Steuerung des Verhaltens wässriger Baustoffsysteme in unterirdischen Formationen und der Verringerung des Wasserzuflusses bei der Förderung von Öl oder Gas, gibt es aber im Zusammenhang mit der Erschließung, Ausbeutung und Komplettierung unterirdischer Erdöl- und Erdgaslagerstätten auch noch zeitlich nachgelagerte Probleme, für die nach wie vor keine optimalen technischen Lösungen gefunden werden konnten.

Ein konkretes Beispiel hierfür ist die Bildung von so genannten Gashydraten, die beim Transport von wasserhaltigen Erdöl- oder Erdgasgemischen durch Pipelines entstehen können.

Bei Gashydraten handelt es sich im Allgemeinen um kristalline Einschlussverbindungen von Gasmolekülen, wie beispielsweise Methan, Ethan oder Propan in Wasser. Diese eisähnlichen Verbindungen bilden sich bei niedrigen Temperaturen und hohen Drücken und können in Abhängigkeit von den jeweiligen Druckverhältnissen und Gaszusammensetzungen deutlich über den Gefrierpunkt von Wasser bis zum Teil über 25°C hinaus existieren. Diese Gashydrate können auch in Wasser enthaltenden Erdöl- oder Erdgasgemischen auftreten und so bei dem Transport von Erdöl oder Erdgas zur Verstopfung der Fördereinrichtungen und Pipelines führen.

Um dies zu vermeiden, werden kinetische Gashydratinhibitoren eingesetzt, welche die Kristallbildung verlangsamen bzw. verhindern.

Als kinetische Gashydratinhibitoren können eine Vielzahl von unterschiedlichen Substanzen verwendet werden. So ist beispielsweise in EP 1450004 A1 der Einsatz von bestimmten quartären Ammoniumverbindungen als Gashydratinhibitor beschrieben, während in DE 10163259 A1 der Einsatz von modifizierten Polyvinylalkoholen und in US 6,331,508 die Verwendung von Polyoxyalkylendiaminen diskutiert wird.

Besondere Effektivität als kinetische Gashydratinhibitoren besitzen synthetische Polymere, welche in den Seitengruppen cyclische (Pyrrolidon -oder Caprolactamreste) oder acyclische Amidstrukturen aufweisen. Derartige Polymere sind bespielsweise in US 6,451,892, WO 2004/042190 A1 oder WO 96/41784 A1 beschrieben.

Des Weiteren sind auch verschiedene Pfropfpolymere, welche diese Amidstrukturen enthalten, bekannt. So beschreiben beispielsweise DE 19935063 A1 und DE 10 2005 05 30 64 A1 Pfropfpolymerisate auf Basis von Polyalkylenglykol.

Ein Nachteil der beschriebenen Gashydratinhibitoren besteht darin, dass diese Produkte nicht oder nur unzureichend bioabbaubar sind. Die Bioabbaubarkeit wird aber aus leicht nachvollziehbaren Gründen von den Anwendern, aber auch vom Gesetzgeber und den Behörden zunehmend verstärkt eingefordert.

Pfropfcopolymere, so genannte Graft-Copolymere, von N-Vinylpyrrolidon (NVP) und Gelatine als Polyamid-Komponente, sind bspw. bekannt aus J. Appl. Polym. Sci. 68 (1998) 1485-1492, J. Appl. Polym. Sci. 55 (1995) 1291-1299 und J. Photographic sci. 40 (1992) 248-251. Auch in Eur. Polym. J. 21 (1985) 195-199 wird das Pfropfen von NVP auf Gelatine und zusätzlich die Anwendung dieser Pfropfcopolymere als Plasmaexpander beschrieben. In J. Appl. Polym. Sci. 12 (1968) 1557-1565 wird NVP photochemisch auf Kollagen und andere Faserproteine gepfropft.

Hydrogele welche unter anderem bei der Herstellung von Kontaktlinsen eingesetzt werden, sind in WO 83/00339 A1 beschrieben. Diese Hydrogele sind durch Pfropfen verschiedener Monomere, zu denen auch NVP und N-Vinylcaprolactam (NVC) gehören, auf Kollagen bzw. Gelatine als Polyamidunterlage erhältlich. In DE 19 936 476 A1 ist eine Streichmasse beschrieben, die bei der Herstellung bedruckbarer Papiere eingesetzt wird. Die dort beschriebene Streichmasse enthält unter anderem Pfropfcopolymere von Gelatine und NVP bzw. NVC. Analoge Copolymere die zusätzlich vernetzt sind, sind DE 102 38 176 A1 zu entnehmen.

Bioabbaubare Superabsorber, welche durch Reaktion eines natürlichen mit einem synthetischen Polymer herstellbar sind, sind in WO 2005/084724 A1 beschrieben. Als natürliche Polymere sind unter anderem Gelatine und Kollagen erwähnt; als Bestandteil des synthetischen Polymers sind NVP und NVC genannt.

Aus den geschilderten Nachteilen des Standes der Technik hat sich für die vorliegende Erfindung die Aufgabe gestellt, neue Pfropfcopolymere auf Basis eines Polyamids, welches mit Maleinsäureanhydrid umgesetzt wurde und das mindestens eine vinylisch ungesättigte Seitenkette enthält, bereitzustellen, wobei hinsichtlich der Verwendung insbesondere deren Eignung als Gashydratinhibitoren im Vordergrund stand. Im Zusammenhang mit dieser speziellen Anwendung sollten insbesondere Pfropfcopolymere bereitgestellt werden, die biologisch abbaubar sind. Außerdem sollten die neuen Pfropfcopolymere durch eine relativ kostengünstige und einfache Verfahrensführung und unter Einsatz leicht zugänglicher Ausgangsmaterialien herstellbar sein.

Gelöst wurde diese Aufgabe dadurch, dass die erfindungsgemäßen bioabbaubaren Pfropfcopolymere auf Basis eines Polyamids, welches mit Maleinsäureanhydrid umgesetzt wurde als gepfropfte Seitenkette mindestens einen Vertreter ausgewählt aus a) N-Vinylcaprolactam und/oder b) N-Vinylpyrrolidon enthalten.

Dabei stellt die vor der eigentlichen Pfropfung stattfindende Umsetzung des Polyamids mit Maleinsäureanhydrid einen wesentlichen Vorteil der erfindungsgemäßen Pfropfcopolymere gegenüber dem Stand der Technik dar, da durch diese Vorgehensweise eine besonders effiziente und vollständige Pfropfung von NVC und/oder NVP erreicht werden kann.

Überraschend wurde auch gefunden, dass diese Pfropfcopolymere gemäß vorliegender Erfindung nicht nur entsprechend der Aufgabenstellung in guter Qualität und auf einfache Weise hergestellt werden können, sondern dass sich derartige Pfropfcopolymere auch hervorragend als kinetische Gashydratinhibitoren eignen, die zudem in der Regel sehr gut bioabbaubar sind, wobei sie bis zu ihrer eigentlichen Anwendung äußerst lagerstabil und transportunempfindlich aufbewahrt werden können.

Als bevorzugter Polyamid-Komponente basieren die Pfropfcopolymere gemäß vorliegender Erfindung auf mindestens einer Verbindung der Reihe der natürlichen Polyamide und besonders bevorzugt Caseine, Gelatinen, Kollagenen, Kochenleime, Blutalbumine, Sojaproteine und deren durch Oxidation, Hydrolyse oder Depolymerisation entstandene Abbauprodukte. Daneben kommen aber auch gleichberechtigt synthetische Polyamide in Frage und in diesem Fall ebenfalls wieder deren durch Oxidation, Hydrolyse oder Depolymerisation entstandene Abbauprodukte, sowie generell Mischungen der vorgeschlagenen Polyamid-Varianten.

Als besonders vorteilhaft haben sich Varianten der erfindungsgemäßen Pfropfcopolymere erwiesen, die die Polyamid-Komponente in Anteilen von 10 bis 95 Gew.-% und vorzugsweise von 50 bis 70 Gew.-% enthalten. Auch hinsichtlich der Seitenketten umfasst die vorliegende Erfindung spezifische Varianten, wobei Pfropfcopolymere von besonderem Interesse sind, deren Seitenkettenmonomere a) und b) unabhängig voneinander und jeweils bezogen auf das Gesamtpfropfcopolymer, in Anteilen von 5 bis 90 Gew.-%, vorzugsweise von 15 bis 60 Gew.-% und besonders bevorzugt von 30 bis 50 Gew.-% enthalten sind.

Wie bereits bei der Würdigung des nächstkommenden Standes der Technik mehrfach angegeben, lag bei der Überwindung der bekannten Nachteile ein besonderes Augenmerk darauf, dass die Pfropfcopolymere der vorliegenden Erfindung leicht und besonders wirtschaftlich zugänglich sind. Aus diesem Grund berücksichtigt eine Erfindung Pfropfcopolymere, die dadurch hergestellt werden können, dass a) mindestens eine reaktive Doppelbindung in die Polyamid-Komponente eingeführt wird, und b) die Seitenketten-Monomeren a) und/oder b) nachfolgend an die mindestens eine eingeführte Doppelbindung polymerisiert werden.

Als besonders bevorzugt ist anzusehen, dass der Verfahrensschritt a) durch Reaktion der Polyamid-Komponente mit mindestens 1 Gew.-% Maleinsäureanhydrid durchgeführt wurde.

Die Herstellung der erfindungsgemäßen Pfropfcopolymere ist im Allgemeinen keiner besonderen Einschränkung unterworfen und es müssen auch keine spezifischen Verfahrensparameter beachtet werden. Dennoch empfiehlt es sich im Rahmen der vorliegenden Erfindung, die Verfahrensschritte a) und/oder b) bei Temperaturen zwischen - 10°C und 250°C, vorzugsweise zwischen 0 und 100°C und unabhängig von der gewählten Reaktionstemperatur besonders bevorzugt in Gegenwart eines Lösemittels und hier insbesondere eines polaren Lösemittels wie Wasser oder Dimethylsulfoxid durchzuführen.

Von der vorliegenden Erfindung ist als weitere Variante die Möglichkeit umfasst, das Pfropfcopolymer im Anschluss an die Verfahrensstufe a) und b) zusätzlich zu vernetzen, was insbesondere mit Hilfe von mehrfach funktionalen und ethylenisch ungesättigten Verbindungen wie z. B. Di- oder Trimethacrylaten erfolgen kann.

Die unter anderem so erhältlichen Pfropfcopolymere gemäß vorliegender Erfindung zeichnen sich durch eine Molmasse M̅ₙ > 5000 g/mol und insbesondere > 10.000 g/mol aus.

Ein weiteres vorteilhaftes Merkmal der erfindungsgemäßen Pfropfcopolymere ist in deren Wasserlöslichkeit, aber auch in der damit verbundenen Bioabbaubarkeit zu sehen. Beide Merkmale sind für sich betrachtet bevorzugte Eigenschaften, die von der vorliegenden Erfindung ebenfalls umfasst werden.

Die vorliegende Erfindung zeichnet sich neben den Eigenschaften der neuen Pfropfcopolymere und deren Herstellungsverfahren auch durch deren Verwendungsspektrum aus:

So können die beschriebenen Pfropfcopolymere insbesondere in bauchemischen Anwendungen sowie bei der Erschließung, Ausbeutung und Komplettierung unterirdischer Erdöl- und Erdgaslagerstätten, aber auch bei Tiefbohrungen eingesetzt werden.

Ein weiterer Aspekt ist auf die Verwendung der beschriebenen Pfropfcopolymere bei der Förderung und dem Transport von Öl oder Gas und in diesem Zusammenhang insbesondere als Gashydratinhibitoren zu sehen, wobei ihre Verwendung als bioabbaubare, kinetische Gashydratinhibitoren als besonders vorteilhaft anzusehen ist.

Die eben beschriebene Verwendung der spezifischen Pfropfcopolymere zeichnet sich speziell dadurch aus, dass das Pfropfcopolymer als Polyamid-Komponente mindestens eine Verbindung der Reihe der natürlichen Polyamide und besonders bevorzugt Caseine, Gelatinen, Kollagene, Knochenleime, Blutalbumine, Sojaproteine und deren durch Oxidation, Hydrolyse oder Depolymerisation entstandene Abbauprodukte enthält. Auch in diesem Fall kommen des Weiteren synthetische Polyamide und wiederum ebenfalls deren durch Oxidation, Hydrolyse oder Depolymerisation entstandene Abbauprodukte in Frage. Selbstverständlich können auch jegliche geeignete Mischungen daraus eingesetzt werden.

Ihre vorteilhaften Eigenschaften und Wirkungen enthalten auch diese Pfropfcopolymere insbesondere dann, wenn sie die Polyamid-Komponente in Anteilen von 10 bis 95 Gew.-% und vorzugsweise von 50 bis 70 Gew.-% enthalten.

Es ist darüber hinaus als sehr günstig anzusehen, wenn alle beschriebenen Pfropfcopolymere der vorliegenden Erfindung als ethylenisch ungesättigte Verbindung mindestens einen Vertreter der Reihe der Vinylether in ihren O-,S-,P- oder N-Formen, und bevorzugt als N-Vinylamid wie N-Vinylcaprolactam, N-Vinylpyrrolidon oder N-Methyl-N-Vinylacetamid, der Acrylsäure, Methacrylsäure, 2-Ethylacrylsäure, 2-Propylacrylsäure, Vinylessigsäure, Croton- und Isocrotonsäure, Maleinsäure, Fumarsäure, Itaconsäure, Citraconsäure sowie deren Amide, der Vinylphosphonsäure, der Vinylsulfonsäure, der Vinylalkoxysilane, der Methallysulfonsäure und der Styrole enthalten.

Besondere Vorteile sind erfindungsgemäß dann zu beobachten, wenn es sich bei den Pfropfcopolymeren um Pfropfcopolymere auf Basis eines Polyamids handelt, welches mit Maleinsäureanhydrid umgesetzt wurde und welches mindestens eine vinylisch ungesättigte Seitenkette aufweist, wobei es sich dann bei der gepfropften Seitenkette um mindestens einen Vertreter, ausgewählt aus a) N-Vinylcaprolactam und/oder b) N-Vinylpyrrolidon handelt.

Sämtliche im Rahmen dieser Erfindung beschriebenen Pfropfcopolymere sind wasserlöslich und darüber hinaus bioabbaubar und finden Verwendung im Zusammenhang mit der Förderung, der Lagerung und dem Transport von Erdöl und Erdgas und hier insbesondere zur Vermeidung von Gashydratinhibitoren.

Durch die ebenfalls beschriebenen Synthesewege wird ein besonders effizientes Pfropfen auf die Polyamid- und insbesondere eine Gelatineunterlage ermöglicht, wobei diese Vorgehensweise deutlich weniger anfällig gegenüber Verunreinigungen oder Schwankungen der Rohstoffqualität ist, als das direkte Pfropfen ("Graften") von ethylenisch ungesättigten Verbindungen auf natürliche oder synthetische Polyamide und insbesondere Gelatine.

Die nachfolgenden Beispiele verdeutlichen die Vorteile der vorliegenden Erfindung.

### Beipiele

### Herstellungsbeispiel 1:

65 g Gelatinehydrolysat (PB Gelatines) wurden in 130 g Wasser gelöst. Anschließend wurde die Lösung auf 70°C erhitzt und 1,5 g Maleinsäureanhydrid zusammen mit 9,8 g 20%ige NaOH zugegeben, so dass sich ein pH-Wert von ca. 8,5 einstellte. Nachdem die Reaktion 2 h bei 70°C durchgeführt wurde, wurden 36,6 g N-Vinylcaprolactam in 126 g 2-Propanol zudosiert. Danach werden 1,4 g Tetraethylenpentamin und 0,03 g Natriumdodecylsulfat zugegeben und die Polymerisation durch Zugabe von 0,7 g Wako V50 gestartet. Nach einer Reaktionszeit von 1 h wurde die Reaktionsmischung am Rotationsverdampfer eingeengt. Es wurde ein gelblicher, kristalliner Feststoff erhalten. Die gesamte Reaktion wurde unter Schutzgas (N₂) durchgeführt.

### Herstellungsbeispiel 2:

65 g Gelatinehydrolysat (PB Gelatines) wurden in 130 g Wasser gelöst. Anschließend wurde die Lösung auf 70°C erhitzt und 1,5 g Maleinsäureanhydrid zusammen mit 14,4 g 20%ige NaOH zugegeben, so dass sich ein pH-Wert von ca. 8,5 einstellte. Nachdem die Reaktion 2 h bei 70°C durchgeführt wurde, wurden 36,6 g N-Vinylcaprolactam in 126 g Ethylenglykol zudosiert. Danach werden 0,04 g Natriumdodecylsulfat zugegeben, der pH-Wert mit Schwefelsäure auf etwa 7,6 eingestellt und die Polymerisation durch Zugabe von 1,45 g Wako V50 gestartet. Nach einer Reaktionszeit von 1 h wurde die Reaktion beendet und der pH-Wert mit NaOH auf 9,5 eingestellt. Es wurde eine gelbliche, trübe Lösung mit einer Viskosität von 860 mPas erhalten. Die gesamte Reaktion wurde unter Schutzgas (N₂) durchgeführt.

### Herstellungsbeispiel 3:

65 g Gelatinehydrolysat (PB Gelatines) wurden in 130 g Wasser gelöst. Anschließend wurde die Lösung auf 70°C erhitzt und 1,5 g Maleinsäureanhydrid zusammen mit 12,5 g 20%ige NaOH zugegeben, so dass sich ein pH-Wert von ca. 8,5 einstellte. Nachdem die Reaktion 2 h bei 70°C durchgeführt wurde, wurden 20,3 g N-Vinylcaprolactam und 16,2 g N-Vinylpyrrolidon in 126 g Ethylenglykol zudosiert. Danach werden 0,04 g Natriumdodecylsulfat zugegeben, der pH-Wert mit Schwefelsäure auf etwa 7,6 eingestellt und die Polymerisation durch Zugabe von 1,45 g Wako V50 gestartet. Nach einer Reaktionszeit von 1 h wurde die Reaktion beendet, die Reaktionsmischung mit 182 g Wasser verdünnt und der pH-Wert mit NaOH auf etwa 9,5 eingestellt. Es wurde eine klare Lösung mit einer Viskosität von 11.300 mPas erhalten.
Die gesamte Reaktion wurde unter Schutzgas (N₂) durchgeführt.

### Herstellungsbeispiel 4:

65 g Gelatinehydrolysat (PB Gelatines) wurden in 130 g Wasser gelöst. Anschließend wurde die Lösung auf 70°C erhitzt und 1,5 g Maleinsäureanhydrid zusammen mit 12,8 g 20%ige NaOH zugegeben, so dass sich ein pH-Wert von ca. 8,5 einstellte. Nachdem die Reaktion 2 h bei 70°C durchgeführt wurde, wurden 21,4 g N-Vinylcaprolactam und 15,2 g N-Methyl-N-Vinylacetamid in 128 g Ethylenglykol zudosiert. Danach werden 0,04 g Natriumdodecylsulfat zugegeben, der pH-Wert mit Schwefelsäure auf etwa 7,6 eingestellt und die Polymerisation durch Zugabe von 1,45 g Wako V50 gestartet. Nach einer Reaktionszeit von 1 h wurde die Reaktion beendet und der pH-Wert mit NaOH auf etwa 9,5 eingestellt. Es wurde eine klare Lösung mit einer Viskosität von 540 mPas erhalten.
Die gesamte Reaktion wurde unter Schutzgas (N₂) durchgeführt.

### Herstellungsbeispiel 5:

70 g Gelatinehydrolysat (PB Gelatines) wurden in 139 g Wasser gelöst. Anschließend wurde die Lösung auf 70°C erhitzt und 1,6 g Maleinsäureanhydrid zusammen mit 13,8 g 20%ige NaOH zugegeben, so dass sich ein pH-Wert von ca. 8,5 einstellte. Nachdem die Reaktion 2 h bei 70°C durchgeführt wurde, wurden 21,7 g N-Vinylcaprolactam in 95 g Ethylenglykol zudosiert. Danach wurden 0,04 g Natriumdodecylsulfat zugegeben, der pH-Wert mit Schwefelsäure auf etwa 7,6 eingestellt und die Polymerisation durch Zugabe von 0,86 g Wako V50 gestartet. Nach einer Reaktionszeit von 1 h wurde die Reaktion beendet und der pH-Wert mit NaOH auf etwa 9,5 eingestellt. Es wurde eine gelbliche, leicht trübe Lösung mit einer Viskosität von 190 mPas erhalten.
Die gesamte Reaktion wurde unter Schutzgas (N₂) durchgeführt.

### Herstellungsbeispiel 6:

65 g Gelatinehydrolysat (PB Gelatines) wurden in 130 g Wasser gelöst. Anschließend wurde die Lösung auf 70°C erhitzt und 1,5 g Maleinsäureanhydrid zusammen mit 12,9g 20%ige NaOH zugegeben, so dass sich ein pH-Wert von ca. 8,5 einstellte. Nachdem die Reaktion 2 h bei 70°C durchgeführt wurde, wurden 36,6 g N-Vinylcaprolactam in 126 g Ethylenglykol zudosiert. Danach werden 0,04 g Natriumdodecylsulfat und 5,0 g Natriumhypophosphit zugegeben, der pH-Wert mit Schwefelsäure auf etwa 7,6 eingestellt und die Polymerisation durch Zugabe von 1,45 g Wako V50 gestartet. Nach einer Reaktionszeit von 1 h wurde die Reaktion beendet und der pH-Wert mit NaOH auf 9,5 eingestellt. Es wurde eine gelbliche, klare Lösung mit einer Viskosität von 100 mPas erhalten.
Die gesamte Reaktion wurde unter Schutzgas (N₂) durchgeführt.

### Herstellungsbeispiel 7:

65 g Gelatinehydrolysat (PB Gelatines) wurden in 130 g Wasser gelöst. Anschließend wurde die Lösung auf 70°C erhitzt und 1,5 g Maleinsäureanhydrid zusammen mit 12,5 g 20%ige NaOH zugegeben, so dass sich ein pH-Wert von ca. 8,5 einstellte. Nachdem die Reaktion 2 h bei 70°C durchgeführt wurde, wurden 30,5 g N-Vinylcaprolactam und 6,1 g N-Vinylpyrrolidon in 126 g Ethylenglykol zudosiert. Danach werden 0,04 g Natriumdodecylsulfat zugegeben, der pH-Wert mit Schwefelsäure auf etwa 7,6 eingestellt und die Polymerisation durch Zugabe von 1,45 g Wako V50 gestartet. Nach einer Reaktionszeit von 1 h wurde die Reaktion beendet, die Reaktionsmischung mit 211 g Wasser verdünnt und der pH-Wert mit NaOH auf etwa 9,5 eingestellt. Es wurde eine klare Lösung mit einer Viskosität von 900 mPas erhalten.
Die gesamte Reaktion wurde unter Schutzgas (N₂) durchgeführt.

### Anwendungsbeispiel (1) zur Gashydratinhibierung:

Von dem gemäß Herstellungsbeispiel erhaltenen Pfropfcopolymer wurde mit entionisiertem Wasser eine Lösung der Konzentration 9000 ppm bereitet. 120 ml dieser Lösung wurden dann in einen sauberen und trockenen 300ml-Stahlautoklaven gegeben. Die Lösung wurde während des gesamten Tests mit einem Teflon-ummantelten Rührfisch bei 500 Umdrehungen pro Minute gerührt.

Der Gasraum über der wässrigen Lösung wurde bei Raumtemperatur für ca. 1 min mit Mungo-2-Gas gespült (Zusammensetzung Mungo-2-Gas: 1,75 Mol% N₂; 1,36 Mol% CO₂; 79,29 Mol% Methan; 10,84 Mol% Ethan; 4,63 Mol% Propan; 0,62 Mol% isoButan; 1,12 Mol% n-Butan; 0,2 Mol% iso-Pentan; 0,19 Mol% n-Pentan). Anschließend wurde die Lösung bei Atmosphärendruck unter einer Atmosphäre von Mungo-2-Gas auf 4°C abgekühlt.

Danach wurde Mungo-2-Gas bis zu einem Druck von 30 bar (Überdruck) aufgepresst, 10 min gewartet und der Innendruck mit dem Ziel einer weitgehenden Kompensation eines Druckverlustes, der durch Lösen von Gas in der kalten Lösung unter 30 bar Druck hervorgerufen wird, erneut auf 30 bar eingestellt.

Abschließend wurde der Autoklav vollständig geschlossen und bei gleich bleibender Innentemperatur und konstantem Rühren der Innendruck kontinuierlich gemessen. Dabei wurde als Inhibierungszeit die Zeitspanne gewertet, bei der der Innendruck auf < 29 bar abgesunken war. Je größer diese Inhibierungszeit ist, desto besser ist die Wirkung als Gashydratinhibitor.

| Gashydratinhibitor | Inhibierungszeit |
|---|---|
| Nullwert ohne Zusatz von Inhibitor (Vergleich) | 1 h 20 min |
| Pfropfcopolymer gemäß Herstellungsbeispiel 1 (Erfindung) | 35 h |
| Pfropfcopolymer gemäß Herstellungsbeispiel 3 (Erfindung) | 174 h |
| Pfropfcopolymer gemäß Herstellungsbeispiel 4 (Erfindung) | > 360 h |

Das Beispiel zeigt, dass der Zusatz des erfindungsgemäßen Pfropfcopolymers die Bildung von Gashydraten deutlich hinauszögert.

### Anwendungsbeispiel 2 zur Gashydratinhibierung:

Durchführung analog Anwendungsbeispiel 1 mit dem Unterschied, dass statt Mungo-2-Gas Methangas bei einem Druck von 60 bar verwendet wurde.

| Gashydratinhibitor | Inhibierungszeit |
|---|---|
| Pfropfcopolymer gemäß Herstellungsbeispiel 2 (Erfindung) | > 350 h |

## Patentansprüche

1. Bioabbaubares Pfropfcopolymer auf Basis eines Polyamid, welches mit Maleinsäureanhydrid umgesetzt wurde, mit mindestens einer vinylisch ungesättigten Seitenkette, **dadurch gekennzeichnet, dass** es als gepfropfte Seitenkette mindestens einen Vertreter ausgewählt aus a) *N*-Vinylcaprolactam und/oder b) *N-*Vinylpyrrolidon enthält.

2. Pfropfcopolymer nach Anspruch 1, **dadurch gekennzeichnet, dass** es als Polyamid-Komponente mindestens eine Verbindung der Reihe der natürlichen Polyamide, besonders bevorzugt Caseine, Gelatinen, Kollagenen, Kochenleime, Blutalbumine, Sojaproteine und deren durch Oxidation, Hydrolyse oder Depolymerisation entstandene Abbauprodukte, synthetische Polyamide und deren durch Oxidation, Hydrolyse oder Depolymerisation entstandene Abbauprodukte sowie Mischungen daraus enthält.

3. Pfropfcopolymere nach einem der Ansprüche 1 oder 2, **dadurch gekennzeichnet, dass** es die Polyamid-Komponente in Anteilen von 10 bis 95 Gew.-% und vorzugsweise von 50 bis 70 Gew.-% enthält.

4. Pfropfcopolymer nach einem der Ansprüche 1 bis 3, **dadurch gekennzeichnet, dass** es die Seitenkettenmonomere a) und b) unabhängig voneinander und jeweils bezogen auf das Gesamtpfropfcopolymer in Anteilen von 5 bis 90 Gew.-%, vorzugsweise von 15 bis 60 Gew.-% und besonders bevorzugt von 30 bis 50 Gew.-% enthält.

5. Pfropfcopolymer nach einem der Ansprüche 1 bis 3, **dadurch gekennzeichnet, dass** es hergestellt wurde durch a) Einführen mindestens einer reaktiven Doppelbindung in die Polyamid-Komponente, und b) nachfolgende Polymerisation der Seitenkettenmonomeren a) und/oder b) an die mindestens eine eingeführte Doppelbindung.

6. Pfropfcopolymer nach Anspruch 5, **dadurch gekennzeichnet, dass** der Verfahrensschritt a) durch Reaktion der Polyamid-Komponente mit mindestens 1 Gew.-% Maleinsäureanhydrid durchgeführt wurde.

7. Pfropfcopolymer nach einem der Ansprüche 5 oder 6, **dadurch gekennzeichnet, dass** die Verfahrensschritte a) und/oder b) bei Temperaturen zwischen -10° und 250°C, vorzugsweise zwischen 0 und 100°C und besonders bevorzugt in Gegenwart eines Lösemittels und insbesondere eines polaren Lösemittels wie Wasser oder Dimethylsulfoxid durchgeführt wurde.

8. Pfropfcopolymer nach einem der Ansprüche 5 bis 7, **dadurch gekennzeichnet, dass** das Pfropfcopolymer im Anschluss an die Verfahrensstufe a) und b) zusätzlich vernetzt wurde, insbesondere mit Hilfe von mehrfach funktionalen, ethylenisch ungesättigter Verbindungen wie z. B. Di- oder Trimethacrylaten.

9. Pfropfcopolymer nach einem der Ansprüche 1 bis 8, **dadurch gekennzeichnet, dass** es eine Molmasse M̅ₙ > 5000 g/mol und bevorzugt > 10.000 g/mol besitzt.

10. Pfropfcopolymer nach einem der Ansprüche 1 bis 9, **dadurch gekennzeichnet, dass** es wasserlöslich ist.

11. Verwendung des Pfropfcopolymer nach einem der Ansprüche 1 bis 10 in bauchemischen Anwendungen sowie bei der Erschließung, Ausbeutung und Komplettierung unterirdischer Erdöl- und Erdgaslagerstätten und bei Tiefbohrungen.

12. Verwendung des Pfropfcopolymers nach einem der Ansprüche 1 bis 10 bei der Förderung und dem Transport von Öl oder Gas und insbesondere als Gashydratinhibitor.

## Claims

1. Biodegradable graft copolymer based on a polyamide which was reacted with maleic anhydride, having at least one vinylically unsaturated side chain, **characterized in that** it contains, as a grafted side chain, at least one representative selected from a) *N*-vinylcaprolactam and/or b) *N-*vinylpyrrolidone.

2. Graft copolymer according to Claim 1, **characterized in that** it contains, as a polyamide component, at least one compound from the series consisting of the natural polyamides, particularly preferably caseins, gelatins, collagens, bone glues, blood albumens, soya proteins and the degradation products thereof formed by oxidation, hydrolysis or depolymerization, synthetic polyamides and the degradation products thereof formed by oxidation, hydrolysis or depolymerization and mixtures thereof.

3. Graft copolymers according to either of Claims 1 and 2, **characterized in that** it contains the polyamide component in proportions of 10 to 95% by weight and preferably of 50 to 70% by weight.

4. Graft copolymer according to any of Claims 1 to 3, **characterized in that** it contains the side chain monomers a) and b), independently of one another and in each case based on the total graft copolymer, in proportions of 5 to 90% by weight, preferably of 15 to 60% by weight and particularly preferably of 30 to 50% by weight.

5. Graft copolymer according to any of Claims 1 to 3, **characterized in that** it was prepared by a) introduction of at least one reactive double bond into the polyamide component and b) subsequent polymerization of the side chain monomers a) and/or b) at the at least one double bond introduced.

6. Graft copolymer according to Claim 5, **characterized in that** process step a) was carried out by reaction of the polyamide component with at least 1% by weight of maleic anhydride.

7. Graft copolymer according to either of Claims 5 and 6, **characterized in that** process steps a) and/or b) were carried out at temperatures between -10° and 250°C, preferably between 0 and 100°C, and particularly preferably in the presence of a solvent and in particular of a polar solvent, such as water or dimethyl sulphoxide.

8. Graft copolymer according to any of Claims 5 to 7, **characterized in that** the graft copolymer was additionally crosslinked after process stages a) and b), in particular with the aid of polyfunctional, ethylenically unsaturated compounds, such as, for example, di- or trimethacrylates.

9. Graft copolymer according to any of Claims 1 to 8, **characterized in that** it has a molar mass M̅ₙ of > 5000 g/mol and preferably > 10.000 g/mol.

10. Graft copolymer according to any of Claims 1 to 9, **characterized in that** it is water-soluble.

11. Use of the graft copolymer according to any of Claims 1 to 10 in construction chemistry applications and in the development, exploitation and completion of underground mineral oil and natural gas deposits and in deep wells.

12. Use of the graft copolymer according to any of Claims 1 to 10 in the extraction and the transport of oil or gas and in particular as a gas hydrate inhibitor.

## Revendications

1. Copolymère greffé biodégradable à base d'un polyamide, qui a été transformé avec de l'anhydride de l'acide maléique, présentant au moins une chaîne latérale vinyliquement insaturée, **caractérisé en ce qu'**il contient comme chaîne latérale greffée au moins un représentant choisi parmi a) le N-vinylcaprolactame et/ou b) la vinylpyrrolidone.

2. Copolymère greffé selon la revendication 1, **caractérisé en ce qu'**il contient comme composant polyamide au moins un composé de la série des polyamides naturels, de manière particulièrement préférée les caséines, les gélatines, les collagènes, les ciments à os, les albumines sanguines, les protéines du soja et leurs produits de dégradation formés par oxydation, hydrolyse ou dépolymérisation, les polyamides synthétiques et leurs produits de dégradation formés par oxydation, hydrolyse ou dépolymérisation ainsi que les mélanges de ceux-ci.

3. Copolymère greffé selon l'une quelconque des revendications 1 ou 2, **caractérisé en ce qu'**il contient le composant polyamide en des proportions de 10 à 95% en poids et de préférence de 50 à 70% en poids.

4. Copolymère greffé selon l'une quelconque des revendications 1 à 3, **caractérisé en ce qu'**il contient les monomères de chaînes latérales a) et b), indépendamment l'un de l'autre et à chaque fois par rapport au copolymère greffé total en des proportions de 5 à 90% en poids, de préférence de 15 à 60% en poids et de manière particulièrement préférée de 30 à 50% en poids.

5. Copolymère greffé selon l'une quelconque des revendications 1 à 3, **caractérisé en ce qu'**il a été préparé par a) introduction d'au moins une double liaison réactive dans le composant polyamide et b) polymérisation consécutive des monomères des chaînes latérales a) et/ou b) au niveau de ladite au moins une double liaison introduite.

6. Copolymère greffé selon la revendication 5, **caractérisé en ce que** l'étape de procédé a) a été réalisée par réaction du composant polyamide avec au moins 1% en poids d'anhydride de l'acide maléique.

7. Copolymère greffé selon l'une quelconque des revendications 5 à 6, **caractérisé en ce que** les étapes de procédé a) et/ou b) ont été réalisées à des températures entre -10° et 250°C, de préférence entre 0 et 100°C et de manière particulièrement préférée en présence d'un solvant et en particulier d'un solvant polaire tel que l'eau ou le diméthylsulfoxyde.

8. Copolymère greffé selon l'une quelconque des revendications 5 à 7, **caractérisé en ce que** le copolymère greffé a en outre été réticulé après les étapes de procédé a) et b), en particulier à l'aide de composés polyfonctionnels, éthyléniquement insaturés, tels que par exemple les diméthacrylates ou les triméthacrylates.

9. Copolymère greffé selon l'une quelconque des revendications 1 à 8, **caractérisé en ce qu'**il présente une masse molaire M̅ₙ > 5000 g/mole et de préférence > 10 000 g/mole.

10. Copolymère greffé selon l'une quelconque des revendications 1 à 9, **caractérisé en ce qu'**il est soluble dans l'eau.

11. Utilisation du copolymère greffé selon l'une quelconque des revendications 1 à 10 dans des utilisations chimiques dans la construction ainsi que lors de l'exploration, de l'exploitation et de la complétion de gisements souterrains de pétrole et de gaz naturel et lors de forages profonds.

12. Utilisation du copolymère greffé selon l'une quelconque des revendications 1 à 10 lors de l'extraction et du transport d'huile et de gaz et en particulier comme inhibiteur des hydrates de gaz.
